**Europäisches Patentamt**

**European Patent Office**

**Office européen des brevets**

(19)

(11) Veröffentlichungsnummer: **0 227 901**
**A2**

# (12) EUROPÄISCHE PATENTANMELDUNG

(21) Anmeldenummer: **86114401.2**

(22) Anmeldetag: **17.10.86**

(51) Int. Cl.⁴: **H 02 M 5/257**, H 02 M 7/06

(30) Priorität: **22.10.85 DE 3537447**

(43) Veröffentlichungstag der Anmeldung: **08.07.87**
Patentblatt 87/28

(84) Benannte Vertragsstaaten: **BE CH DE FR GB IT LI NL SE**

(71) Anmelder: **DIEHL GMBH & CO., Stephanstrasse 49, D-8500 Nürnberg (DE)**

(72) Erfinder: **Dupot, Guy, 18, rue du Dabo Otterswiller, F-67700 Saverne (FR)**
Erfinder: **Simon, Pierre Luc, 13a, rue de Brechlingen, F-67310 Wasselonne (FR)**

(74) Vertreter: **Hofmann, Gerhard, Dipl.-Ing. et al, Stephanstrasse 49, D-8500 Nürnberg (DE)**

(54) Versorgungsschaltung für ein aus einem Netz gespeistes Gerät.

(57) Eine Versorgungsschaltung (1) für ein aus einen Netz (5) gespeistes Gerät (2) zur Ansteuerung einer Schaltstrecke (4), die in Serie mit einer Last (3) am Netz (5) betreibbar ist, soll dafür ausgelegt werden, ohne das Erfordernis zusätzlicher Speiseleitungen über die Netzleitung (6) hinaus mit geringem Schaltungsaufwand die Versorgungsspannung (U) des Gerätes (2) unabhängig vom Betriebszustand der Last (3) verfügbar zu haben. Dafür liegt in der Netzleitung (6) in Serie mit der Last (3) und der Schaltstrecke (4) eine Anschnittschaltung (8), die erst bei Überschreiten eines Bruchteils (Uz) der Amplitude der Netzspannung (u) durchschaltet; wobei diese Spannungsspitzen (Uz) über einen Speicher (14) als die Versorgungsspannung (U) zur Verfügung gestellt werden.

VP 36 EP
Fg/be

DIEHL GMBH & CO., 8500 Nürnberg

TITLE MODIFIED
see front page

Versorgungsschaltung

Die Erfindung betrifft eine Versorgungsschaltung gemäß dem Oberbegriff des Anspruches 1.

Eine derartige Versorgungsschaltung ist aus der FR-PS 24 49 922 bekannt. Dort ist als Verlustglied in Serie mit der Last in der Netzleitung ein ohmscher Widerstand vorgesehen, dessen Spannungsabfall zur Ansteuerung einer Konstantstromschaltung für die Nachladung eines Akkumulators dient, dessen Spannung als die Versorgungsspannung für ein zeitgesteuertes Schaltgerät zum Einschalten bzw. zum Ausschalten der Last (beispielsweise eines elektrischen Heizkörpers oder einer Umwälzpumpe) dient. Der besondere Vorteil jener Schaltungsanordnung ist, daß es für den Betrieb des Schaltgerätes aus einem Speicher zur Betriebsüberbrückung bei Netzspannungsausfall und insbes. während abgeschalteter Last lediglich des Zweidraht-Anschlusses bedarf, der ohnehin für die Speisung der Last zur Schaltstrecke hin verlegt ist; daß also Installations-Umbaumaßnahmen zum Betrieb des Schaltgerätes vollständig entfallen und dadurch auch für bestehende Installationssysteme die Neigung beispielsweise zur Umrüstung einer einfachen Schaltstrecke auf energiesparende Heizungssteuersysteme gefördert wird.

Der Erfindung liegt jedoch die Erkenntnis zugrunde, daß die vorbekannte Schaltungsanordnung insofern nachteilig ist, als der schaltungstechnische Aufwand für die Nachladung des Speichers recht erheblich ist, und die Nachladung obendrein in für die Betriebsgegebenheiten nachteiliger Weise in Abhängigkeit vom momentanen Leistungsbedarf der Last erfolgt, weil der Spannungsabfall über dem ohmschen Verlustglied von der momentanen Stromaufnahme der Last bestimmt wird. Auch kann das Betriebsverhalten der Last durch den leistungsabhängigen Spannungsabfall beeinträchtigt werden.

In Erkenntnis dieser Gegebenheiten liegt der Erfindung die Aufgabe zugrunde, eine Versorgungsschaltung gattungsgemäßer Art derart auszubilden, daß sie mit geringerem schaltungstechnischem Aufwand und somit betriebssicherer realisierbar ist und möglichst zugleich ein günstigeres Betriebsverhalten sowohl hinsichtlich unterschiedlicher Lasten im Stromkreis der Netzleitung wie auch hinsichtlich der Nachlade-Gegebenheiten zur Bereitstellung der Versorgungsspannung für ein Gerät, insbesondere ein Schaltgerät erbringt.

Diese Aufgabe wird erfindungsgemäß im wesentlichen dadurch gelöst, daß die gattungsgemäße Versorgungsschaltung gemäß dem kennzeichnenden Teil des Anspruches 1 ausgelegt ist.

Nach dieser Lösung treten in der Netzleistung, also vor der Last, praktisch keine vom Leistungsbedarf der Last abhängige ohmschen Verluste mehr auf. Stattdessen wird mit der Periodizität der Netzspannung kurzzeitig ein kleiner, konstanter Spannungsbetrag im Netz-Laststromkreis unterdrückt, um der Gewinnung der Geräte-Speisespannung und vorzugsweise insbesondere der Nachladung eines Gangreserve-Energiespeichers zu dienen. Diese Betriebsweise ist schaltungstechnisch am einfachsten als Anschnittsteuerung mit so kleinem Anschnittsteuerwinkel realisierbar, daß nachteilige Auswirkungen auf das Betriebsverhalten einer Last beliebiger in Betracht kommender Leistungsstufe und Impedanz nicht zu erwarten sind.

Die Gewinnung der Geräte-Versorgungsspannung, also die Nachladung des Speichers erfolgt nun mit schaltungsbedingt vorgegebener Spitzenspannung, was die Dimensionierung einer gattungsgemäßen Versorgungsschaltung für ein bestimmtes Betriebs- bzw. Ausfallüberbrückungsverhalten erleichtert.

Zusätzliche Alternativen und Weiterbildungen sowie weitere Merkmale und Vorteile der Erfindung ergeben sich aus den weiteren Ansprüchen und, auch unter Berücksichtigung der Darlegungen in der Zusammenfassung, aus nachstehender Beschreibung eines in der Zeichnung unter Beschränkung auf das Wesentliche etwas vereinfacht skizzierten bevorzugten Ausführungsbeispiels zur erfindungsgemäßen Lösung. Es zeigt:

> Fig. 1  ein Blockschaltbild über den typischen Einsatz
>          einer erfindungsgemäßen Versorgungsschaltung
>          u n d

> Fig. 2  ein Spannungs-Zeit-Diagramm zur Erläuterung der
>          Wirkungsweise der Versorgungsschaltung nach Fig. 1

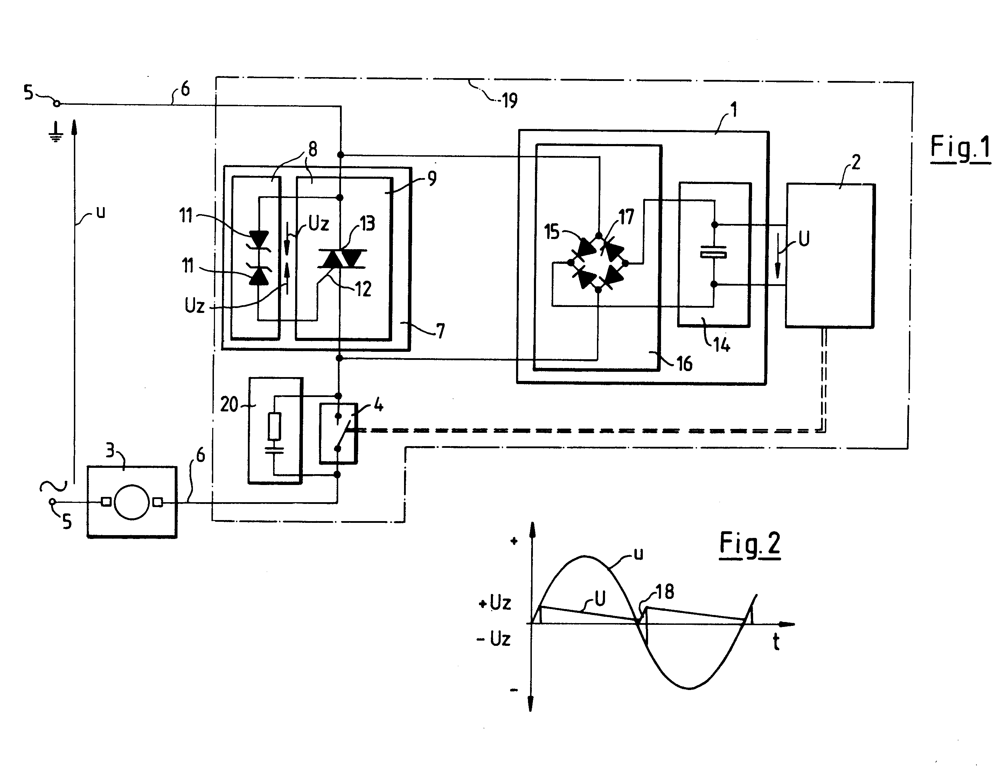

Die in der Zeichnung umrissene Versorgungsschaltung 1 dient der Speisung eines (etwa eines zeitabhängig oder in Abhängigkeit von Umweltgrößen wie der Temperatur gesteuerten) Schalt-Gerätes 2 mit einer pulsierenden Gleichstrom-Versorgungsspannung U, deren Pegel einen Bruchteil der Amplitude der Netzspannung u beträgt, an die eine Last 3 angeschlossen ist. Bei dieser Last 3 handelt es sich beispielsweise um das Einspritzsystem eines Ölbrenners oder um die Umwälzpumpe einer Warmwasserheizung; wobei diese Last 3 beim in Fig. 1 dargestellten Ausführungsbeispiel über eine Schaltstrecke 4 ein- bzw. ausschaltbar ist, die aus dem Schalt-Gerät 2 - beispielsweise mit der Funktion eines Thermostaten, einer Schaltuhr oder eines Uhrenthermostaten - betätigbar ist.

Mit den Anschlußklemmen des Netzes 5 und der Last 3 sowie seiner Schaltstrecke 4 liegt in der Netzleitung 6 ein Verlustglied 7 in Serie, dem die Versorgungsschaltung 1 parallel-geschaltet ist. Das Verlustglied 7 ist nun aber nicht ein einfacher Widerstand, an dem eine Spannung nach Maßgabe des momentanen Leistungsbedarfes der über die Schaltstrecke 4 an das Netz 5 angeschalteten Last 3 abfällt – mit der Folge, daß die Versorgungsspannung U für das Gerät 2 in Abhängigkeit von den Lastgegebenheiten in der Netzleitung 6 schwanken würde; stattdessen ist als Verlustglied 7 eine auf einen kleinen Bruchteil der Amplitude der Netz-Wechselspannung u ansprechende Anschnittschaltung 8 vorgesehen, die im dargestellten Beispielsfälle einfach aus einer bidirektional arbeitenden Thystorschaltung, beispielsweise einem Triac 9, besteht. Sie wird nicht nach Maßgabe des Laststromes in der Netzleitung 6, sondern nach Maßgabe der periodisch schwankenden Netzspannung u durchgeschaltet. Hierfür ist ein Steuersignalgeber 10 vorgesehen, dessen Funktion beispielsweise auf der spannungsabhängigen Durchschaltcharakteristik wenigstens einer Zenerdiode 11 basiert, die das Triac 9 durch Ansteuern seiner Steuerelektrode 12 zündet, sobald die spezifische Zenerspannung Uz vom zeitabhängigen Verlauf der Netzspannung u überschritten wird. Wenn in jeder der beiden gegenpoligen Halbperioden der Netzspannung u das Triac 9 gezündet werden soll, sind (wie in der Zeichnung berücksichtigt) zwei Zenerdioden 11 zwischen der Anode 13 und der Steuerelektrode 12 des Triac 9 gegensinnig in Serie zu schalten.

Zu Beginn einer jeden Halbperiode der Netzspannung u baut sich über dem Verlustglied 7 eine Spannung gemäß dem Verlauf der Netzspannung u auf, bis der Steuersignalgeber 10 anspricht und das Triac 9 niederohmig schaltet, womit der Spannungsabfall über diesem Verlustglied 7 zusammenbricht; wie in Fig. 2 im Spannungs-Zeit-Diagramm dargestellt.

Damit die Versorgungsspannung U für das Gerät 2 nicht zu stark pulsiert, ist zwischen dem Verlustglied 7 zum Abgriff der Versorgungsspannung U und dem damit zu speisenden Gerät 2 ein elektrischer Ladungsspeicher 14 (beispielsweise in der Bauform eines elektrochemischen Akkumulator oder eines Kondensators) vorgesehen, der mit den kleinen über dem Verlustglied 7 periodisch auftretenden Spannungsspitzen Uz aufgeladen und nach Maßgabe der Belastung durch das Gerät 2 langsam wieder entladen wird (vgl. den Zeitverlauf der Versorgungsspannung U in Fig. 2). Dabei wird über eine Rücklauf-Sperrdiode 15 sichergestellt, daß der Ladungsspeicher 14 sich nicht über das Verlustglied 7 entladen kann, dessen Triac 9 während des Großteiles einer Halbperiode ja durchgeschaltet, also niederohmig ist. Um bei Betrieb des Triac 9 in beiden Halbperioden die positiven und auch die negativen Spannungsspitzen Uz, die bei Gegen-Serienschaltung zweier Zenerdioden 11 jeweils zu Beginn einer Halbperiode auftreten, für die Nachladung der Speichers 14 verwerten zu können, ist nach dem zeichnerisch dargestellten Ausführungsbeispiel eine Speiseschaltung 16 vorgesehen, in der statt einer einzelnen Sperrdiode 15 eine komplette Graetz- oder Vollwellen-Brückenschaltung 17 ausgebildet ist, wie in Fig. 2 durch den positiven mittleren Nachlade-Impuls 18 berücksichtigt.

Der Spannungsabfall über dem Verlustglied 7 ist also nicht abhängig von den Lastgegebenheiten in der Netzleitung 6; sondern allein abhängig von der Ansprechspannung Uz des Steuersignalgebers 10 für die Durchschaltung des Triac 9, und damit beispielsweise über die Typenauswahl der Zenerdioden 11 betragsmäßig vorgebbar.

Zur Beeinflussung des Betriebes der Last 3 über die Schaltstecke 4, beispielsweise eines Thermo- oder eines Zeitschalters als dem Gerät 2, bedarf es lediglich des Anschlusses der beiden Netzleitungen 6 an das mit dem Verlustglied 7 und der Versorgungsschaltung 1 vor dem Gerät 2 ausgestattete Schaltsystem 19; es entfällt jeglicher Aufwand für die Installation zusätzlicher Leitungen zum Betrieb des Gerätes 2 bzw. zur Speisung einer Netzausfall-Betriebsreserve. Um auch bei abgeschalteter Last, wenn also das Gerät 2 (oder eine andere Einflußgröße) die Schaltstrecke 4 öffnet und damit die Netzleitung 6 unterbricht, oder beispielsweise bei vorübergehendem Ausfall der Netzspannung u, eine temperaturgesteuerte oder zeitgesteuerte Funktionsweise des Gerätes 2 nicht aussetzen zu lassen, kann der Speicher 14 zur Bereitstellung der Energiereserve dimensioniert sein. Um ihn aber nicht zu groß dimensionieren zu müssen, kann bei geöffneter Schaltstrecke 4 deren Überbrückung mittels einer hochohmigen R-C-Serienschaltung 20 vorgesehen sein, über die bei wirkungslosem Verlustglied 7 über die Last 3 ein sehr schwacher Nebenschlußstrom in die Speiseschaltung fließt. So bleibt stets sichergestellt, daß dem Gerät 2 die für die Fortdauer seines Betriebes notwendige Versorgungsspannung U zur Verfügung steht.

Bei Zuschalten der Last 3 über die Schaltstrecke 4 an das Netz 5 erfährt der Betrieb der Last 3 eine Anschnittsteuerung; die allerdings wegen gegenüber der Amplitude der Netzspannung u kleiner Anschnitt-Ansprechspannung Uz vernachlässigbar für das Betriebsverhalten und die Leistungsbilanz der Last 3 ist, zumal durch das Tiefpassverhalten einer in der Regel induktiven Last 3 diese sehr kleinen Stromflußwinkel-Lücken überbrückt werden, sich dann also an der Last 3 gar nicht auswirken.

Patentansprüche


1. Versorgungsschaltung (1) für ein aus einem Netz (5) mit einer gegenüber der Amplitude der Netzspannung (u) kleinen Versorgungsspannung (U) gespeistes Gerät (2), insbesondere ein Schaltgerät mit in Serie zu einer Last (3) im Stromkreis der Netzleitung (6) liegender Schaltstrecke (4), wobei die Versorgungsschaltung (1) einem in Serie mit der Last (3) liegenden Verlustglied (7) parallel-geschaltet ist, dadurch gekennzeichnet, daß als Verlustglied (7) eine Anschnittschaltung (8) vorgesehen ist, die durchschaltet, wenn die Wechsel-Netzspannung (u) den Wert der Versorgungsspannung (U) etwa erreicht.


2. Versorgungsschaltung nach Anspruch 1, dadurch gekennzeichnet, daß das Verlustglied (7) in Serie mit der Last (3) ein Triac (9) mit spannungsgesteuertem Steuersignalgeber (10) aufweist.


3. Versorgungsschaltung nach Anspruch 2, dadurch gekennzeichnet, daß der Steuersignalgeber (10) eine Zenerdiode (11) aufweist.


4. Versorgungsschaltung nach einem der vorangehenden Ansprüche, dadurch gekennzeichnet, daß zwischen dem Verlustglied (7) und dem Gerät (2) ein Ladungsspeicher (14) hinter einer Rücklauf-Sperrdiode (15) vorgesehen ist.

5. Versorgungsschaltung nach Anspruch 4,
dadurch gekennzeichnet,
daß dem Speicher (14) eine Vollwellen-Brückenschaltung (17
vorgeschaltet und das Triac (9) im Vollwellenbetrieb angesteuert
ist.

6. Versorgungsschaltung nach Anspruch 5,
dadurch gekennzeichnet,
daß der Steuersignalgeber (10) zwei gegensinnig in Serie geschaltete Zenerdioden (11) aufweist.

7. Versorgungsschaltung nach einem der vorangehenden Ansprüche,
dadurch gekennzeichnet,
daß eine hochohmige R-C-Serienschaltung (20) parallel zur Schaltstrecke (4) mit der Anschnittschaltung in Serie liegt.

Fig.1

Fig.2